# EUROPÄISCHE PATENTSCHRIFT

(11) **EP 2 303 787 B1**
(45) Veröffentlichungstag und Bekanntmachung des Hinweises auf die Patenterteilung: **01.02.2012**
(21) Anmeldenummer: 09769315.4
(22) Anmeldetag: 25.06.2009
(51) Int. Cl.: C03B 17/04, C03B 5/182

(54) **VERFAHREN UND VORRICHTUNG ZUR HERSTELLUNG EINES QUARZGLASZYLINDERS**
METHOD AND APPARATUS FOR PRODUCING A QUARTZ GLASS CYLINDER
PROCÉDÉ ET DISPOSITIF POUR PRODUIRE UN CYLINDRE DE VERRE DE QUARTZ

(30) Priorität: 27.06.2008 DE 102008030115
(43) Veröffentlichungstag der Anmeldung: 06.04.2011
(73) Patentinhaber: Heraeus Quarzglas GmbH & Co. KG, 63450 Hanau (DE)
(72) Erfinder: LEBER, Helmut, 63454 Hanau (DE); BERG, Rainer, 63505 Langenselbold (DE); WHIPPEY, Nigel, 63500 Seligenstadt (DE)
(74) Vertreter: Staudt, Armin Walter
(86) Internationale Anmeldenummer: PCT/EP2009/057962
(87) Internationale Veröffentlichungsnummer: WO 2009/156467

(56) Entgegenhaltungen:
- DE-A1- 1 596 664
- DE-B- 1 208 046
- JP-A- 10 287 435
- JP-A- 2002 211 934

## Beschreibung

Die vorliegende Erfindung betrifft ein Verfahren zum Ziehen eines Quarzglaszylinders, indem einem Schmelztiegel SiO₂-haltige Ausgangsmaterial zugeführt, darin zu einer viskosen Quarzglasmasse erweicht und diese durch eine im Bodenbereich des Schmelztiegels vorgesehene Ziehdüse mit spaltförmigem Auslass, der von einer Bodenöffnung und einem Ziehdüsen-Innenteil definiert wird, als zylinderförmiger Quarzglasstrang vertikal nach unten abgezogen und daraus der Quarzglaszylinder abgelängt wird.

Weiterhin betrifft die Erfindung eine Vorrichtung zum Ziehen eines Quarzglaszylinders, mit einem Schmelztiegel zur Aufnahme von SiO₂-haltigem Ausgangsmaterial, der einen Tiegel-Innenraum umfasst, der von einer Seitenwand und einem Bodenbereich begrenzt ist, mit einer Heizeinrichtung zum Erweichen des Ausgangsmaterials, sowie mit einer im Bodenbereich des Schmelztiegels vorgesehenen Ziehdüse mit spaltförmigem Auslass.

### Stand der Technik

Vertikal-Tiegelziehverfahren werden zur Herstellung von zylinderförmigen Bauteilen, insbesondere von Rohren oder Platten aus Quarzglas mit beliebigem Querschnittsprofil eingesetzt. Dabei wird SiO₂-Körnung als Glasausgangsstoff in einem Schmelztiegel zu einer relativ hochviskosen Quarzglasmasse erschmolzen (im Folgenden auch als "Quarzglasschmelze" bezeichnet) und über eine Düse am Tiegelboden als Glasstrang abgezogen.

Dabei liegt ein besonderes Augenmerk darauf, Inhomogenitäten im abgezogenen Glasstrang zu vermeiden und im Tiegel-Innenraum möglichst gleiche und konstante Schmelzbedingungen zu schaffen. Infolge ihrer hohen Temperatur und Viskosität kann eine Quarzglasschmelze jedoch nicht mittels der Techniken homogenisiert werden, wie sie bei niedrigviskosen Glasschmelzen, wie beispielsweise Borosilikatglas- oder Kalk-Natron-Glasschmelzen, üblich sind. Insbesondere sind zum Läutern derartiger Glasschmelzen eingesetzte Rühreinrichtungen für die Homogenisierung einer Quarzglasschmelze nicht geeignet, da beim Rühren erzeugte Blasen wegen der hohen Viskosität im Verlauf des Ziehprozesses nicht mehr beseitigt werden können.

Man versucht daher, ein möglichst gleichmäßiges Einschmelzen der Glasausgangsstoffe mit Hilfe eines besonders angepassten axialen Temperaturverlaufs im Ziehofen zu erreichen (DE 22 17 725 B) oder gleiche und konstante Einschmelzbedingungen über eine reproduzierbare Verteilung und Verdichtung der einzuschmelzenden SiO₂-Körnung auf der Schmelzoberfläche (US 3,249,417 A; WO 2006/015763 A) zu gewährleisten.

Es ist auch vorgeschlagen worden, die Strömungen der zähflüssigen Quarzglasschmelze zwecks Homogenisierung der Temperatur zu lenken. Ein Verfahren dieser Art beschreibt die DE 1 596 664 OS aus der auch eine Vorrichtung der eingangs genannten Gattung bekannt ist. Zum Ziehen eines rohrförmigen Quarzglasstrangs aus einem Schmelztiegel wird hierbei eine Wolfram-Düse eingesetzt, die von einem an der Ofenwandung befestigten Innenkragen und einem Dom gebildet wird, der an einem Hohlschaft aus Wolfram hängend in der Quarzglasschmelze gehalten wird. Die Position des Dorns ist veränderbar. Hierzu wird das obere Ende des Schaftes an einer Positioniereinrichtung gehalten. Der Dom weist ein Oberteil mit einer Ausbuchtung in Form eines Stundenglases auf, das über einen Zwischenring mit einem kegelstumpfförmigen Unterteil verbunden ist, das sich unter Belassung eines in seiner Weite veränderbaren Ringspalts bis in die vom Innenkragen aufgespannte Öffnung erstreckt. Durch die Geometrie des Oberteils werden die zentralen, kälteren Schmelzströme auslenkt und so eine Homogenisierung der Temperatur innerhalb der Quarzglasschmelze bewirkt.

Das bekannte Verfahren ist zum Ziehen von rohr- oder plattenförmigen Quarzglaszylindern mit großen seitlichen Abmessungen jedoch nicht uneingeschränkt geeignet. Dies wird im Folgenden am Beispiel eines Quarzglaszylinders in Form eines Quarzglasrohres näher erläutert. Der Durchmesser des abgezogenen Rohres und seine Wandstärke werden durch die Geometrie der Ziehdüse, die Viskosität des Glases im Bereich der Ziehdüse und/oder durch die Abziehgeschwindigkeit bestimmt. Es ist üblich, einen Gasstrom in das Rohr zu leiten, so dass durch den Blasdruck innerhalb des Rohres ein weiterer Parameter zur Aufweitung des Rohr-Durchmessers zur Verfügung steht. Eine derartige Aufweitung ist jedoch nur in Grenzen möglich. Denn mit zunehmendem Rohr-Durchmesser müssen zur Aufrechterhaltung des Soll-Durchmessers größere Gasvolumina eingeleitet werden, die die Rohrinnenwandung kühlen und die den Ziehvorgang erschweren. Der maximal mögliche Durchmesser des abzuziehenden Rohres ist daher in erster Linie durch die Abmessung der Ziehdüse begrenzt, so dass für die Herstellung von Quarzglasrohren mit großen Außendurchmessern auch entsprechend große Ziehdüsen eingesetzt werden müssen. Je mehr sich die Ziehdüsenweite jedoch an den Innendurchmesser des Ofenraumes annähert, um so mehr begünstigt und fördert die Ziehdüse eine Strömung der Quarzglasschmelze im Randbereich des Ofens. Diese Randströmung, die sich in ihren Schmelzbedingungen und damit in ihrer Zusammensetzung und Viskosität von den eher zentralen Schmelzströme beträchtlich unterscheidet, kann dabei unmittelbar durch die Ziehdüse austreten, so dass die so erhaltenen Quarzglasrohre nennenswerte Inhomogenitäten hinsichtlich ihrer Zusammensetzung und Dichte aufweisen können. Daran vermag auch das mit dem bekannten Verfahren mögliche Auslenken der zentralen Schmelzströme nur wenig zu ändern.

In der DE 1 208 046 PS geht es darum, beim Ziehen eines Quarzglasrohres aus dem Schmelztiegel eine kleine, möglichst rotationssymmetrische Ziehzwiebel zu erhalten. Zu diesem Zweck wird vorgeschlagen, oberhalb der Ziehdüse eine 15 mm dicke Ringplatte anzuordnen, die den gleichen Innendurchmesser wie die Ziehdüse hat, und die mit sechs nach Innen weisenden Zähnen versehen ist. Die Zähne bewirken eine geringfügige Umlenkung der Strömung beim Austritt der Quarzglasschmelze aus der Düse.

Ähnliche Vorrichtungen, die eine nur eine geringfügige Strömungsumlenkung der Quarzglasschmelze bewirken, sind auch aus der US 2,486,737 A und der US 2,464,028 A zu entnehmen.

Aus der US 2005/0227027 A1 ist ein Verfahren zur Herstellung eines Glasrohres mit einem besonderen Innen- und/oder Außenprofil bekannt. Hierzu wird über eine Bodenauslauf einer Schmelzwanne kontinuierlich schmelzflüssiges Glas entnommen, über einen Formkörper geleitet, so dass ein hohler Külbel entsteht, und dieser wird über ein weiteres Profil, das weiter unten angeordnet ist, nach unten abgezogen. Der Durchmesser des abgezogenen Strangs ist etwa so groß wie die minimale Öffnungsweite des Bodenauslaufs.

### Technische Aufgabe

Der vorliegenden Erfindung liegt daher die Aufgabe zugrunde, ein Verfahren anzugeben, welches die Herstellung homogener Quarzglaszylinder erleichtert, auch wenn deren seitliche Abmessungen in der Größenordnung der Innendurchmesser üblicher Schmelztiegel liegen, insbesondere von Quarzglasrohren mit einem Außendurchmesser von mehr als 200 mm oder von Quarzglasplatten mit einer Breite von mehr als 200 mm.

Weiterhin liegt der Erfindung die Aufgabe zugrunde, eine zur Durchführung des Verfahrens geeignete Vorrichtung bereitzustellen.

Hinsichtlich der Vorrichtung wird diese Aufgabe ausgehend von der eingangs genannten Vorrichtung erfindungsgemäß dadurch gelöst, dass in einem oberen, dem Tiegel-Innenraum zugewandten Bereich der Ziehdüse eine Strömungsverengung vorgesehen ist, die nach unten über einen Strömungskanal in den Auslass mündet, der eine Öffnungsweite aufweist, die größer ist als die Weite der Strömungsverengung, und wobei ein erster Hüllkreis um die Strömungsverengung einen Durchmesser aufweist, der maximal 30 % des Durchmessers eines zweiten Hüllkreises um die maximale seitliche Abmessung des abzuziehenden Quarzglasstrangs beträgt.

Ziel der Erfindung ist es, eine ausgeprägte Randströmung mit einem unmittelbaren Eintritt gering homogenisierter Quarzglasmasse in die Ziehdüse, wie dies bei großen Ziehdüsenabmessungen auftreten kann, zu vermeiden. Hierzu ist das Zusammenspiel mehrerer Maßnahmen entscheidend:
1. In einem oberen Bereich der Ziehdüse ist eine als Strömungsverengung wirkende Öffnung vorgesehen. Durch diese Öffnung hindurch wird die viskose Quarzglasmasse gezwungen. Die Öffnung wirkt als Strömungshindemis für die Randströmung und sie begünstigt eine Strömung im eher zentralen Bereich des Schmelztiegels, die sich durch eine vergleichsweise gleichmäßige Temperaturverteilung und eine homogene chemische Zusammensetzung auszeichnet. Sie bewirkt in jedem Fall auch eine gewisse Durchmischung der Quarzglasmasse. Die maximale Weite der Strömungsverengung wird durch den Durchmesser eines ersten Hüllkreises um die Strömungsverengung definiert.
2. Im Unterschied zur bekannten Vorrichtung ist die Strömungsverengung nicht dazu bestimmt, bei der Einstellung des Querschnittsprofils und insbesondere der Außenabmessung des abzuziehenden Quarzglasstrangs mitzuwirken. Hierfür ist der spaltförmige Auslass vorgesehen, der für die Herstellung einer Quarzglasplatte als einfacher Längsspalt und für die Herstellung eines Quarzglasrohres als Ringspalt ausgebildet ist. Der Auslass bestimmt somit maßgeblich die seitlichen Abmessungen des Quarzglasstrangs (das sind die Abmessungen senkrecht zur Ziehachse). So ist die maximale Weite des Auslasses bei der Herstellung einer Quarzglasplatte für die lange Plattenbreite maßgeblich und bei der Herstellung eines Quarzglasrohres für dessen Au-βendurchmesser. Die maximale Weite des Auslasses ist größer als die Öffnungsweite der Strömungsverengung. Dadurch wird mindestens ein Teil der über die Strömungsverengung austretenden Glasmasse über den Strömungskanal nach außen umgelenkt, der in den Auslass mündet. Durch das Umlenken des Massenstroms nach außen gelangt somit die homogene, im Wesentlichen aus dem zentralen Bereich des Schmelztiegels entnommene Quarzglasmasse - und nicht die aus dem Randbereich stammende Quarzglasmasse - über den Strömungskanal in radial weiter außen liegende Zonen.
3. Der Durchmischungs- und Homogenisierungseffekt der erfindungsgemäßen Vorrichtung ist um so ausgeprägter, je kleiner die Strömungsverengung im Vergleich zu den maximalen seitlichen Abmessungen des abgezogenen Quarzglasstrangs ist. Diese maximale seitliche Abmessung wird durch den Durchmesser eines zweiten Hüllkreises um den Quarzglasstrang definiert. Gemäß der Erfindung ist vorgesehen, dass der erste Hüllkreis um die Strömungsverengung maximal 30 % des Durchmessers des zweiten Hüllkreises beträgt. Im einfachsten Fall ist die Strömungsverengung kreisförmig, was auch eine im Wesentlichen rotationssymmetrische Einströmung der Quarzglasmasse in den Hohlraum fördert. In dem Fall entspricht der erste Hüllkreis um die Strömungsverengung dem Durchmesser der Strömungsverengung. Andernfalls entspricht der erste Hüllkreis dem kleinst möglichen Kreisring um die Strömungsverengung. Der Durchmischungseffekt macht sich insbesondere dann vorteilhaft bemerkbar, wenn der Unterschied zwischen der maximalen seitlichen Abmessung des abzuziehenden Quarzglasstrangs und dem Durchmesser der Strömungsverengung im Bereich des Austritts der Quarzglasmasse groß ist, also bei einem Quarzglasrohr mit großem Außendurchmesser beziehungsweise bei einer Quarzglasplatte mit großer Plattenbreite und einer demgegenüber kleinen Öffnungsweite der Strömungsverengung. Bei Strömungsverengung mit Öffnungsdurchmessern von deutlich mehr als 30% der maximalen seitlichen Abmessungen des Quarzglasstrangs ist kaum noch ein Durchmischungseffekt vorhanden. Andererseits ist die Öffnungsweite der Strömungsverengung auch für den Durchsatz an Quarzglasmasse maßgeblich. Daher sind geringe Öffnungsweiten der Strömungsverengung im Bereich unterhalb von 5 % - bezogen auf die maximale seitliche Abmessung des Quarzglasstrangs - im Hinblick auf die Produktivität des Ziehprozesses unvorteilhaft.

Sofern hier und im Folgenden von der "Öffnungsweite der Strömungsverengung" die Rede ist, bezieht sich dies auf die Öffnungsweite beim Austritt in den Strömungskanal. Da bei der erfindungsgemäßen Vorrichtung die Einstellung der seitlichen Abmessungen des Quarzglaszylinders unabhängig von der Strömungsverengung erfolgt, ist deren Geometrie in dieser Hinsicht nur von geringer Bedeutung. Diese kann zum Beispiel ringförmig, kreisförmig, oval oder polygonal ausgebildet sein. Die Strömungsverengung kann auch von mehreren Öffnungen (beispielsweise als Lochblech) gebildet werden, wobei in dem Fall als erster Hüllkreis der alle Öffnungen umhüllende Umfangskreis definiert wird. Auch Geometrie der Strömungsverengung oberhalb des Strömungskanals ist in Bezug auf die Endabmessungen des Quarzglasstrangs kaum relevant. So kann die Weite der Strömungsverengung - in Ziehrichtung gesehen - vor dem Strömungskanal beispielsweise konstant sein, abnehmen oder zunehmen.

Wesentlich ist, dass die Öffnungsweite der Strömungsverengung beim Austritt der viskosen Quarzglasmasse in den Strömungskanal klein genug ist, um eine nennenswerte Umlenkung des Quarzglasmassenstroms nach außen zu realisieren.

Die erfindungsgemäße Vorrichtung erzwingt somit eine Umlenkung der Strömung der viskosen Quarzglasmasse vor und nach der Strömungsverengung, die eine ausgeprägte Randströmung verhindert und eine Durchmischung der Quarzglasmasse fördert, so dass auch beim Ziehen von Quarzglaszylindem mit großem Außendurchmesser Inhomogenitäten der in die Ziehdüse eintretenden Quarzglasmasse hinsichtlich Dichte und Temperaturverteilung beseitigt oder vermindert werden.

Bei einer bevorzugten Ausführungsform der erfindungsgemäßen Vorrichtung ist vorgesehen, dass die Strömungsverengung in einem Bereich um eine Mittelachse des Tiegel-Innenraums verläuft.

Da der Durchmischungs- und Homogenisierungseffekt der erfindungsgemäßen Vorrichtung um so ausgeprägter ist, je mittenachsennaher die Strömungsverengung innerhalb des Tiegel-Innenraums angeordnet ist und je kleiner ihre Öffnungsweite ist, wird eine Ausführungsform der Vorrichtung bevorzugt, bei der die Strömungsverengung einen Öffnungsquerschnitt aufweist, dessen Fläche weniger als 10 %, vorzugsweise weniger als 50 %, der radialen Querschnittsfläche des Tiegel-Innenraums beträgt.

Bei einer Strömungsverengung mit einem Öffnungsquerschnitt, der deutlich mehr als 10 % der radialen Querschnittsfläche des Tiegel-Innenraums ausmacht, kann die Randströmung relativ ungehindert in die Strömungsverengung gelangen, so dass ein verhältnismäßig geringer Homogenisierungs- und Durchmischungseffekt ergibt.

In dem Zusammenhang hat es sich auch als besonders vorteilhaft erwiesen, wenn der erste Hüllkreis um die Strömungsverengung einen Durchmesser aufweist, der maximal 20 % des Durchmessers des zweiten Hüllkreises beträgt.

Bei einer besonders bevorzugten Ausgestaltung der erfindungsgemäßen Vorrichtung zum Ziehen eines rohrförmigen Quarzglaszylinders ist eine Ziehdüse mit ringspaltförmigem Auslass vorgesehen, der von einer Bodenöffnung und einem Ziehdüsen-Innenteil definiert wird, wobei die Strömungsverengung nach unten in einen Hohlraum mündet, und das Ziehdüsen-Innenteil einen in den Hohlraum unter Belassung des Strömungskanals hinein ragenden Dom umfasst, der einen maximalen Außenumfang aufweist, der größer ist als die Weite der Strömungsverengung.

Im Unterschied zur bekannten Vorrichtung ist die Strömungsverengung nicht dazu bestimmt, bei der Einstellung des Außendurchmessers des abzuziehenden, rohrförmigen Quarzglasstrangs mitzuwirken. Stattdessen mündet sie nach unten in einen Hohlraum des Tiegelbodens, in den von oben oder von unten ein einteiliger oder mehrteiliger Dorn hineinragt. Der aus der Strömungsverengung nach unten austretende Massenstrom gelangt in den Hohlraum und trifft auf die Oberfläche des Dorns.

Der Dom zeichnet sich dadurch aus, dass er einen Bereich mit maximalem Au-βendurchmesser aufweist, der größer ist als die Öffnungsweite der Strömungsverengung. Der Bereich mit maximalem Außendurchmesser ist somit unterhalb der Strömungsverengung vorgesehen, wodurch die über die Strömungsverengung austretende Glasmasse nach außen - nämlich um den Dom herum - in den Strömungskanal umgelenkt wird, der zwischen dem Dorn und der Tiegelseitenwand ausgebildet ist. Als Tiegelseitenwand in diesem Sinne wird auch ein an der Tiegel-Innenwand angeordnetes und mit dieser verbundenes Bauteil verstanden, das in den Tiegel-Innenraum ragt. Durch das Umlenken des Massenstroms nach außen gelangt somit die homogene, im Wesentlichen aus dem zentralen Bereich des Schmelztiegels entnommene Quarzglasmasse über den Strömungskanal in radial weiter außen liegende Zonen und mündet in den ringsspaltförmigen Auslass der Ziehdüse, der die radialen Abmessungen des Quarzglasrohres maßgeblich bestimmt.

Wesentlich ist, dass die Öffnungsweite der Strömungsverengung beim Austritt der viskosen Quarzglasmasse in den Hohlraum kleiner ist als der maximale Umfang des Doms, so dass eine Umlenkung des Quarzglasmassenstroms nach au-βen realisierbar ist. Der in den Hohlraum ragende Dorn-Abschnitt ist in der Regel rotationssymmetrisch zur Ziehachse ausgebildet und maßgeblich dadurch bestimmt, dass er ein Abfließen der viskosen Quarzglasmasse nach außen ermöglicht und dass er einen maximalen Umfang aufweist (in radialer Richtung um die Ziehachse gesehen), der größer ist als die Öffnungsweite der Strömungsverengung.

Der Dom kann dabei mittels eines Schaftes gehalten werden, der sich durch den Tiegel-Innenraum erstreckt, wobei insbesondere die Möglichkeit einer "fingerlosen Selbstzentrierung" in Betracht kommt, wie sie in der DE 10 2006 011 579 A1 beschrieben ist. Bei einer anderen bevorzugten Ausführungsform der erfindungsgemäßen Vorrichtung ist vorgesehen, dass der Dorn an mindestens einem Steg gehalten oder mittels diesem zentriert wird, der sich von der Tiegel-Seitenwand zum Dom erstreckt.

Der Dorn wird hierbei mittels eines oder mittels mehrerer Stege, die den Strömungskanal überbrücken, an der Tiegel-Seitenwand gehalten oder zentriert. Diese Art der Halterung des Doms hat den Vorteil, dass ein Schaft, der sich von oben durch den gesamten Tiegel-Innenraum erstreckt, zur Halterung des Doms entbehrlich ist.

Bei einer alternativen und gleichermaßen bevorzugten Ausführungsform der Vorrichtung ist vorgesehen, dass der Dom an mindestens einem Steg gehalten oder mittels diesem zentriert wird, der sich vom Rand der Strömungsverengung zum Dorn oder zu einer nach oben ragenden Verlängerung des Doms erstreckt.

Hierbei wird der Dom ebenfalls an einem Steg oder an mehreren Stegen gehalten oder zentriert. Die Stege verlaufen jedoch im Bereich der Strömungsverengung, so dass sie eine nur kurze Länge zur Überbrückung bis zum Dom aufweisen müssen. Zudem ist im Bereich der Strömungsverengung die Viskosität der Quarzglasmasse relativ gering, so dass durch das Umfließen der Halte- oder Zentrierstege verursachte Inhomogenitäten der Strömung wieder relativ rasch verschwinden. Um den Öffnungsquerschnitt der Strömungsverengung durch einen oder mehrere Stege nicht allzu sehr zu verringern, sind die Stege in diesem Bereich jedoch vorzugsweise eher dünn ausgebildet und nur zur Zentrierung des Doms oder einer nach oben ragenden Verlängerung des Dorns - wie etwa einem Schaft - vorgesehen.

Bei einer besonders bevorzugten Ausgestaltung der beiden zuletzt erläuterten Ausführungsformen der erfindungsgemäßen Vorrichtung ist vorgesehen, dass der der Steg als Hohlsteg ausgebildet ist und mit einer im Dorn ausgebildeten Gaszufuhrleitung für die Zufuhr eines Gases in die Innenbohrung des abgezogenen Quarzglasstrangs verbunden ist.

Diese Ausführungsform ermöglicht eine Gaszufuhr durch den Hohlsteg in den Dorn und von dort in die Innenbohrung des abzuziehenden Quarzglasrohres. Die Gaszufuhr kann zum Einstellen eines Blasdrucks in der Rohr-Innenbohrung eingesetzt werden. Der Hohlsteg kann dient in Verbindung mit anderen Stegverbindungen gleichzeitig zur Halterung des Doms.

Hinsichtlich des Verfahrens zum Ziehen eines Quarzglaszylinders wird die oben angegebene Aufgabe ausgehend von einem Verfahren der eingangs genannten

Gattung erfindungsgemäß dadurch gelöst, dass die viskose Quarzglasmasse über eine in einem oberen, dem Tiegel-Innenraum zugewandten Bereich der Ziehdüse vorgesehene Strömungsverengung, die nach unten über einen Strömungskanal in den Auslass mündet, abgezogen wird, wobei der Auslass eine Öffnungsweite aufweist, die größer ist als die Weite der Strömungsverengung, und wobei ein erster Hüllkreis um die Strömungsverengung einen Durchmesser aufweist, der maximal 30 % des Durchmessers eines zweiten Hüllkreises um die maximale seitliche Abmessung des abzuziehenden Quarzgtasstrangs beträgt.

Ziel des Verfahrens ist es, eine ausgeprägte Randströmung mit einem unmittelbaren Eintritt gering homogenisierter Quarzglasmasse in die Ziehdüse zu vermeiden, wie dies bei großen Ziehdüsendurchmessern geschehen kann. Hierzu ist das Zusammenspiel mehrerer Maßnahmen entscheidend:
1. In einem oberen Bereich der Ziehdüse ist eine als Strömungsverengung wirkende Öffnung vorgesehen. Durch diese Öffnung hindurch wird die viskose Quarzglasmasse gezwungen. Die Öffnung wirkt als Strömungshindemis für die Randströmung und sie begünstigt eine Strömung im eher zentralen Bereich des Schmelztiegels, die sich durch eine vergleichsweise gleichmäßige Temperaturverteilung und eine homogene chemische Zusammensetzung auszeichnet. Sie bewirkt in jedem Fall auch eine gewisse Durchmischung der Quarzglasmasse.
2. Im Unterschied zum bekannten Verfahren ist die Strömungsverengung nicht dazu bestimmt, bei der Einstellung der Außenabmessung des abzuziehenden Quarzglaszylinders wesentlich mitzuwirken. Dafür ist vielmehr der spaltförmige Auslass vorgesehen. Dieser ist für die Herstellung einer Quarzglasplatte als einfacher Längsspalt und für die Herstellung eines Quarzglasrohres als Ringspalt ausgebildet. Der Auslass bestimmt im Wesentlichen das Querschnittprofil des Quarzglasstrangs (also dessen Abmessungen senkrecht zur Ziehachse). So ist die maximale Weite des Auslasses bei der Herstellung einer Quarzglasplatte für die lange Plattenbreite maßgeblich und bei der Herstellung eines Quarzglasrohres für dessen Außendurchmesser. Die maximale Weite des Auslasses ist größer als die Öffnungsweite der Strömungsverengung. Dadurch wird mindestens ein Teil der über die Strömungsverengung austretenden Glasmasse über den Strömungskanal nach außen umgelenkt, der in den Auslass mündet. Durch das Umlenken des Massenstroms nach außen gelangt somit die homogene, im Wesentlichen aus dem zentralen Bereich des Schmelztiegels entnommene Quarzglasmasse - und nicht die aus dem Randbereich stammende Quarzglasmasse - über den Strömungskanal in radial weiter außen liegende Zonen.
3. Beim erfindungsgemäß en Verfahren ist der Durchmischungs- und Homogenisierungseffekt um so ausgeprägter, je kleiner die Strömungsverengung im Vergleich zu den maximalen seitlichen Abmessungen des abgezogenen Quarzglaszylinders ist. Diese maximale seitliche Abmessung wird durch den Durchmesser eines zweiten Hüllkreises um den Quarzglasstrang definiert. Gemäß der Erfindung ist vorgesehen, dass der erste Hüllkreis um die Strömungsverengung maximal 30 % des Durchmessers des zweiten Hüllkreises beträgt. Im einfachsten Fall ist die Strömungsverengung kreisförmig, was auch eine im Wesentlichen rotationssymmetrische Einströmung der Quarzglasmasse in den Hohlraum fördert. In dem Fall entspricht der erste Hüllkreis um die Strömungsverengung dem Durchmesser der Strömungsverengung. Andernfalls entspricht der erste Hüllkreis dem kleinst möglichen Kreisring um die Strömungsverengung. Der Durchmischungseffekt macht sich insbesondere dann vorteilhaft bemerkbar, wenn der Unterschied zwischen der maximalen seitlichen Abmessung des abzuziehenden zylinderförmigen Quarzglasstrangs und dem Durchmesser der Strömungsverengung im Bereich des Austritts der Quarzglasmasse groß ist, also bei einem Quarzglasrohr mit großem Außendurchmesser beziehungsweise bei einer Quarzglasplatte mit großer Plattenbreite und einer demgegenüber kleinen Öffnungsweite der Strömungsverengung. Bei Strömungsverengung mit Öfinungsdurchmessem von deutlich mehr als 30% der maximalen seitlichen Abmessungen des Quarzglasstrangs ist kaum noch ein Durchmischungseffekt vorhanden. Andererseits ist die Öffnungsweite der Strömungsverengung auch für den Durchsatz an Quarzglasmasse maßgeblich. Daher sind geringe Öffnungsweiten der Strömungsverengung im Bereich unterhalb von 5 % - bezogen auf die maximale seitliche Abmessung des Quarzglasstrangs - im Hinblick auf die Produktivität des Ziehprozesses unvorteilhaft.

Da die seitlichen Abmessungen des Quarzglasstrangs unabhängig von der Strömungsverengung eingestellt werden, ist deren Geometrie in dieser Hinsicht nur von geringer Bedeutung, wie bereits weiter oben anhand der erfindungsgemäßen Vorrichtung erläutert. Wesentlich ist, dass die Öffnungsweite der Strömungsverengung beim Austritt der viskosen Quarzglasmasse in den Strömungskanals klein genug ist, um eine Umlenkung des Quarzglasmassenstroms nach außen zu realisieren.

Das erfindungsgemäße Verfahren führt somit zu einer Umlenkung der Strömung der viskosen Quarzglasmasse nach der Strömungsverengung, die eine ausgeprägte Randströmung verhindert und eine Durchmischung der Quarzglasmasse fördert, so dass auch beim Ziehen von Quarzglaszylindem mit großem Außendurchmesser Inhomogenitäten der in die Ziehdüse eintretenden Quarzglasmasse hinsichtlich Dichte und Temperaturverteilung beseitigt oder vermindert werden.

Vorteilhafte Ausgestaltungen des erfindungsgemäßen Verfahrens ergeben sich aus den Unteransprüchen. Soweit in den Unteransprüchen angegebene Ausgestaltungen des Verfahrens den in Unteransprüchen zur erfindungsgemäßen Vorrichtung genannten Ausführungsformen nachgebildet sind, wird zur ergänzenden Erläuterung auf die obigen Ausführungen zu den entsprechenden Vorrichtungsansprüchen verwiesen.

### Ausführuncisbeispiel

Nachfolgend wird die Erfindung anhand von Ausführungsbeispielen und einer Zeichnung näher erläutert. In der Zeichnung zeigt im Einzelnen
- **Figur 1**: einen Schmelzofen mit einer Ziehdüse gemäß der Erfindung in einer ersten Ausführungsform in schematischer Darstellung,
- **Figur 2**: einen Schmelzofen mit einer Ziehdüse gemäß der Erfindung in einer weiteren Ausführungsform in schematischer Darstellung,
- **Figur 3**: eine technische Zeichnung einer Ziehdüse zum Einsatz in einer Vorrichtung und einem Verfahren gemäß der Erfindung zum Ziehen einer Quarzglasplatte, in dreidimensionaler Darstellung und
- **Figur 4**: die Ziehdüse von Figur 3 in einer Draufsicht auf die Strömungsverengung.

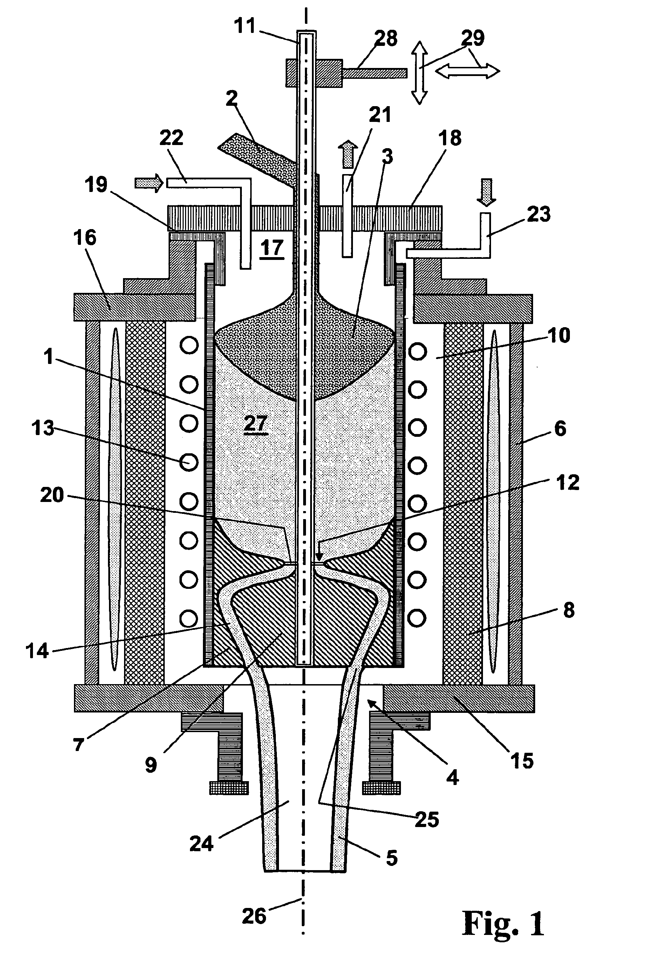

Der Ziehofen gemäß Figur 1 umfasst einen Schmelztiegel 1 aus Wolfram, in den von oben über einen Zufuhrstutzen 2 kontinuierlich SiO₂-Körnung 3 eingefüllt wird. Der Schmelztiegel 1 ist von einem wassergekühlten Ofenmantel 6 unter Bildung eines mit Schutzgas gespülten Schutzgasraums 10 umgeben, innerhalb dessen eine poröse Isolationsschicht 8 aus oxidischem Isolationsmaterial und eine Widerstandsheizeinrichtung 13 zum Erhitzen der SiO₂-Körnung 3 untergebracht sind. Der Schutzgasraum 10 ist nach unten hin offen und ansonsten mit einer Bodenplatte 15 und mit einer Deckplatte 16 nach Außen abgedichtet. Der Schmelztiegel 1 umschließt einen Tiegel-Innenraum 17, der ebenfalls gegenüber der Umgebung mittels einer Abdeckung 18 und einem Dichtelement 19 abgedichtet ist. Durch die Abdeckung 18 ragt ein Einlass 22 und ein Auslass 21 für ein Tiegelinnenraum-Gas in Form von reinem Wasserstoff. Ebenso ist der Schutzgasraum 10 im oberen Bereich mit einem Gaseinlass 23 für reinen Wasserstoff versehen.

Im Bodenbereich des Schmelztiegels 1 befindet sich eine Ziehdüse 4 aus Wolfram. Diese setzt sich zusammen aus einem Ziehdüsen-Außenteil 7 und einem Dorn 9.

Das ringförmige Ziehdüsen-Außenteil 7 ist in den Bodenbereich des Schmelztiegels 1 eingesetzt und mit der Seitenwand des Schmelztiegels 1 verbunden. Es definiert eine kreisrunde Strömungsverengung 12 in der Mittelachse 26 und einen sich daran nach unten anschließenden kuppelförmigen Hohlraum. In den Hohlraum erstreckt sich der Dom 9, der im Wesentlichen in Form eines sich nach unten verjüngenden Kegelstumpfes mit kuppelförmiger Oberseite ausgebildet ist. Zwischen dem Dorn 9 und dem Außenteil 7 verbleibt ein Strömungskanal 14, in den die Strömungsverengung 12 mündet und der von dort über die kuppelförmige Oberseite des Doms 9 nach außen verläuft und sich danach entlang des kegelstumpfförmigen Dorn-Abschnitts bis zum Düsenauslass 25 nach unten leicht verjüngt.

Die weiche Quarzglasmasse 27 gelangt über die Strömungsverengung 12 in den Strömungskanal 14 und wird über diesen bis zum Düsenauslass 25 geführt und als Rohrstrang 5 vertikal nach unten in Richtung der Ziehachse 26 abgezogen.

Der Dorn 9 der Ziehdüse 4 ist mit einem Halterohr 11 aus Wolfram verbunden, das sich durch den Tiegel-Innenraum 17 erstreckt und über die obere Abdeckung 18 aus diesem herausgeführt ist. Außer zur Halterung des Dorns 9 dient das Halterohr 11 auch der Zufuhr eines Prozessgases zum Einstellen eines vorgegebenen Blasdrucks in der Innenbohrung 24 des Rohrstrangs 5. Das aus dem Schmelzofen herausragende obere Ende des Halterohres 11 ist mit einer schematisch dargestellten Höhenverstell- und Verschiebeeinrichtung 28 verbunden, die neben der Höheneinstellung des Doms 9 auch ein freies Verschieben in lateraler Richtung ermöglicht, wie dies die Richtungspfeile 29 andeuten. Zur besseren Zentrierung des Halterohres 11 und des Doms 9 sind im Bereich der Strömungsverengung 12 Zentrierfinger 20 vorgesehen, die sich vom Ziehdüsen-Außenteil 7 bis an das Halterohr 11 erstrecken.

Der Innendurchmesser des Schmelztiegels 1 beträgt 400 mm, der minimale Durchmesser der kreisförmigen Strömungsverengung 12 beträgt 50 mm, und der maximale Außendurchmesser des Doms 9 im Bereich seiner kuppelförmigen Oberseite liegt bei 360 mm. Es wird ein Rohrstrang 5 mit einem Innendurchmesser von 190 mm und einem Außendurchmesser von 210 mm gezogen.

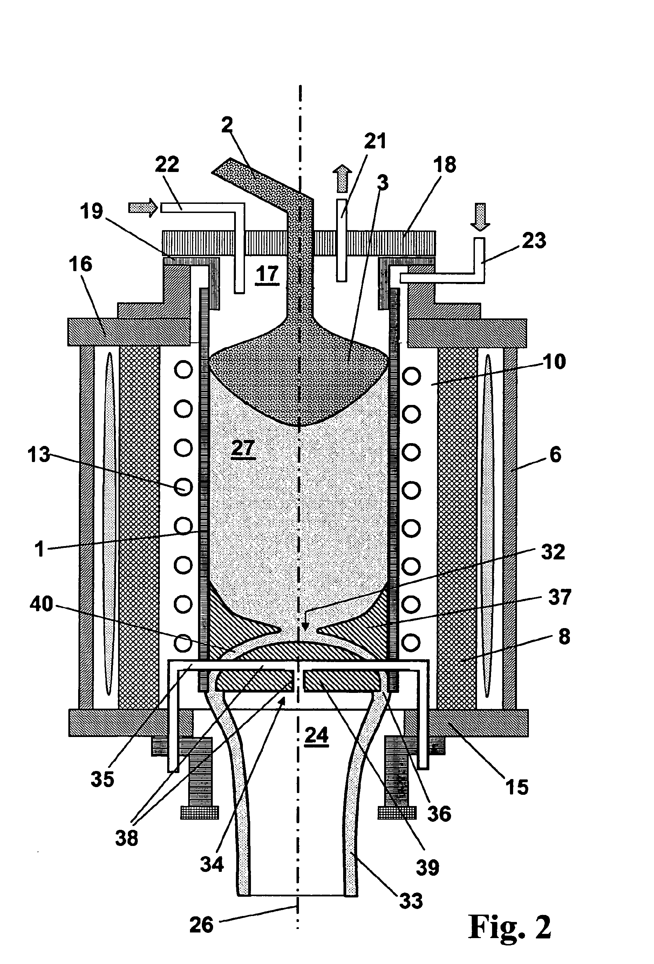

Figur 2 zeigt schematisch einen Ziehofen mit einer Abwandlung der Ziehdüse 34 im Rahmen der Erfindung. Sofern dieselben Bezugsziffern wie in Figur 1 verwendet werden, so sind damit baugleiche oder äquivalente Bauteile und Bestandteile der Vorrichtung bezeichnet, wie sie oben anhand der Beschreibung der ersten Ausführungsform des erfindungsgemäßen Ziehofens näher erläutert sind.

Die Ziehdüse 34 setzt sich zusammen aus einem Ziehdüsen-Außenteil 37 und einem Dorn 39, beides aus Wolfram. Das ringförmige Ziehdüsen-Außenteil 37 ist in den Bodenbereich des Schmelztiegels 1 eingesetzt und mit der Seitenwand verbunden. Es definiert eine kreisrunde Strömungsverengung 32 in der Mittelachse 26 und einen sich daran nach unten anschließenden kuppelförmigen Hohlraum. In den Hohlraum erstreckt sich der Dom 39, der im Wesentlichen in Form eines Kugelabschnitts mit kugelförmiger Oberseite ausgebildet ist. Zwischen dem Dorn 39 und dem Außenteil 37 verbleibt ein Strömungskanal 40, in den die Strömungsverengung 32 mündet und der von dort über die kugelförmige Oberseite des Dorns 39 nach außen bis zum Düsenauslass 36 verläuft.

Die weiche Quarzglasmasse gelangt über die Strömungsverengung 32 in den Strömungskanal 40 und wird über diesen bis zum Düsenauslass 36 geführt und als Rohrstrang 33 vertikal nach unten in Richtung der Ziehachse 26 abgezogen.

Der Dorn 3 der Ziehdüse 34 wird in dem Hohlraum mittels mehrerer Hohlstege 35 aus Wolfram gehalten und fixiert, die sich durch das Ziehdüsen-Außenteil 37 und durch die Wandung des Schmelztiegels 1 erstrecken. Diese sind mit Gaszuführungskanälen 38 verbunden, die innerhalb des Doms 39 ausgebildet sind und die in der Innenbohrung 24 des Rohrstrangs 5 münden. Außer zur Halterung des Dorns 39 dienen die Hohlstege 35 somit auch der Zufuhr eines Prozessgases zum Einstellen eines vorgegebenen Blasdrucks in der Innenbohrung 24 des Rohrstrangs 5.

Der Innendurchmesser des Schmelztiegels 1 beträgt 400 mm, der minimale Durchmesser der kreisförmigen Strömungsverengung 12 beträgt 50 mm, und der maximale Außendurchmesser des Doms 39 im Bereich seiner kuppelförmigen Oberseite liegt bei 360 mm. Es wird ein Rohrstrang 33 mit einem Innendurchmesser von 220 mm und einem Außendurchmesser von 230 mm gezogen.

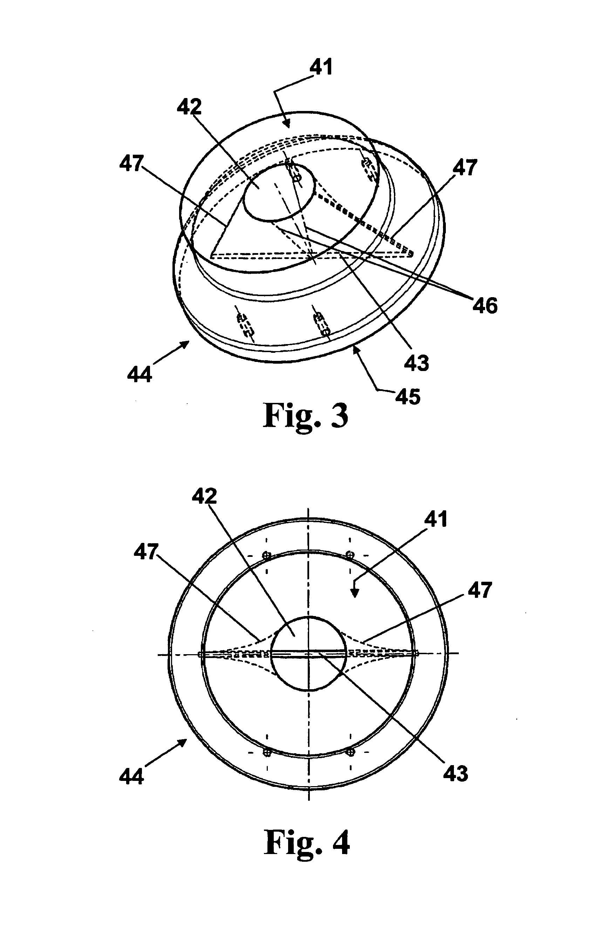

Die in Figur 3 gezeigte Ziehdüse 44 dient zur Herstellung einer Quarzglasplatte. Ihr Außendurchmesser beträgt 400 mm und ihre Höhe 150 mm. Sie passt somit in einen Schmelztiegel, wie er oben anhand der Figuren 1 und 2 beschrieben ist. An ihrer Oberseite 41 weist die Ziehdüse 44 eine zentrale kreisförmige Öffnung 42 mit einem Durchmesser von 55 mm auf (in Figur 3 nicht maßstabsgerecht eingezeichnet). Diese dient als Strömungsverengung im Sinne der Erfindung und geht in Richtung zur Unterseite 45 kontinuierlich in einen länglichen Ziehspalt 43 mit einer Spaltweite von 8 mm und einer Länge von 315 mm über. Mit den gestrichelten Linien 46; 47 sind die Begrenzungen des dazu notwendigen Strömungskanals angedeutet, der sich einerseits von oben nach unten verengt (Linien 46) und andererseits von oben nach unten erweitert (Linien 47). Die unter Einsatz der Ziehdüse 44 herzustellende Quarzglasplatte weist entsprechend den Abmessungen des Ziehspalts 43 eine Dicke von etwa 8 mm und eine Breite von etwa 315 mm auf.

Bei der Draufsicht auf die Ziehdüse 44 von Figur 4 sind die als Strömungsverengung dienende zentrale Öffnung 42 und der in Richtung der Ziehachse darunter angeordnete Ziehspalt 43 sowie der sich nach unten in Richtung auf den Ziehspalt 43 erweiternde Strömungskanal 47 erkennbar.

Nachfolgend wird das erfindungsgemäße Verfahren anhand eines Ausführungsbeispiels und Figur 1 näher erläutert.

Über die Zufuhrstutzen 2 wird kontinuierlich SiO₂-Kömung 3 in den Schmelztiegel 1 eingespeist und darin auf eine Temperatur von etwa 2100 °C bis 2200 °C erhitzt. Dabei bildet sich im unteren Bereich des Schmelztiegels 1 eine homogene, blasenfreie Glasmasse 27 aus, auf der eine Kömungsschicht aus SiO₂-Teilchen 3 aufschwimmt. Die erweichte Quarzglasmasse 27 ist im zentralen Bereich des Schmelztiegels besonders homogen und fließt aus diesem Bereich über die Strömungsverengung 12 der Ziehdüse 4 und gelangt von dort in den Strömungskanal 14, mittels dem sie nach außen umgelenkt und dem Düsenauslass 25 zugeführt wird, aus dem sie anschließend in Form des rohrförmigen Quarzglasstrangs 5 mit dem angegebenen Querschnittsprofil nach unten abgezogen und in Teilstücke der gewünschten Länge abgelängt wird.

Beim erfindungsgemäßen Ziehofen und Verfahren werden somit trotz des Ziehens von Quarzglasrohren mit großem Außendurchmesser eine ausgeprägte Randströmung und der Einzug gering homogenisierter Quarzglasmasse in die Ziehdüse vermeiden. Dies gelingt, indem die viskose Quarzglasmasse 27 durch eine zentrale, als Strömungsverengung 12 wirkende Öffnung gezwungen wird. Diese bewirkt eine gewisse Durchmischung der Quarzglasmasse 27 und begünstigt ein Einströmen der Quarzglasmasse 27 aus dem zentralen Bereich des Schmelztiegels 1, die sich durch eine vergleichsweise gleichmäßige Temperaturverteilung und eine homogene chemische Zusammensetzung auszeichnet. Diese homogene Quarzglasmasse 27 wird von der Strömungsverengung 12 über einen Strömungskanal 14 nach außen umgeleitet und als qualitativ hochwertiges Quarzglasrohr 5; 33 nach unten abgezogen.

## Patentansprüche

1. Vorrichtung zum Ziehen eines Quarzglaszylinders (5; 33), mit einem Schmelztiegel (1) zur Aufnahme von SiO₂-haitigem Ausgangsmaterial (3), der einen Tiegei-Innenraum (17) umfasst, der von einer Seitenwand und einem Bodenbereich begrenzt ist, mit einer Heizeinrichtung (13) zum Erweichen des Ausgangsmaterials (3), sowie mit einer im Bodenbereich des Schmelztiegels (1) vorgesehenen Ziehdüse (4; 34) mit spaltförmigem Auslass (25; 36), **dadurch gekennzeichnet, dass** in einem oberen, dem Tiegel-Innenraum zugewandten Bereich der Ziehdüse (4, 34) eine Strömungsverengung (12; 32) vorgesehen ist, die nach unten über einen Strömungskanal in den Auslass (25; 36) mündet, der eine Öffnungsweite aufweist, die größer ist als die Weite der Strömungsverengung (12; 32), und wobei ein erster Hüllkreis um die Strömungsverengung (12; 32) einen Durchmesser aufweist, der maximal 30 % des Durchmessers eines zweiten Hüllkreises um die maximale seitliche Abmessung des abzuziehenden Quarzglasstrangs (5; 33) beträgt.

2. Vorrichtung nach Anspruch 1, **dadurch gekennzeichnet, dass** die Strömungsverengung (12; 32) in einem Bereich um eine Mittelachse (26) des Tiegel-Innenraums (17) verläuft.

3. Vorrichtung nach Anspruch 1 oder 2, **dadurch gekennzeichnet, dass** die Strömungsverengung (12; 32) einen Öffnungsquerschnitt aufweist, dessen Fläche weniger als 10 %, vorzugsweise weniger als 5 %, der radialen Querschnittsfläche des Tiegel-Innenraums (17) beträgt.

4. Vorrichtung nach einem der vorhergehenden Ansprüche, **dadurch gekennzeichnet, dass** der erste Hüllkreis einen Durchmesser aufweist, der maximal 20 % des Durchmessers des zweiten Hüllkreises beträgt.

5. Vorrichtung nach einem der vorhergehenden Ansprüche, **dadurch gekennzeichnet, dass** zum Ziehen eines rohrförmigen Quarzglaszylinders eine Ziehdüse (4; 34) mit ringspaltförmigem Auslass (25; 36), der von einer Bodenöffnung und einem Ziehdüsen-Innenteil (9; 39) definiert wird, vorgesehen ist, wobei die Strömungsverengung (12; 32) nach unten in einen Hohlraum mündet, und das Ziehdüsen-Innenteil einen in den Hohlraum unter Belassung des Strömungskanals hinein ragenden Dom (9; 39) umfasst, der einen maximalen Außenumfang aufweist, der größer ist als die Weite der Strömungsverengung (12; 32).

6. Vorrichtung nach Anspruch 5, **dadurch gekennzeichnet, dass** der Dorn (39) an mindestens einem Steg (35) gehalten oder mittels diesem zentriert wird, der sich von der Tiegel-Seitenwand zum Dorn (39) erstreckt.

7. Vorrichtung nach Anspruch 5 oder 6, **dadurch gekennzeichnet, dass** der Dorn (9) an mindestens einem Steg (20) gehalten oder mittels diesem zentriert wird, der sich vom Rand der Strömungsverengung (12) zum Dom (9) oder zu einer nach oben ragenden Verlängerung (11) des Doms (9) erstreckt.

8. Vorrichtung nach Anspruch 6 oder 7, **dadurch gekennzeichnet, dass** der Steg (20; 35) als Hohlsteg ausgebildet ist und mit einer im Dom (39) ausgebildeten Gaszufuhrleitung (38) für die Zufuhr eines Gases in die Innenbohrung (24) des abgezogenen Quarzglasrohres (33) verbunden ist.

9. Verfahren zum Ziehen eines Quarzglaszylinders, indem einem Schmelztiegel (1) SiO₂-haltiges Ausgangsmaterial (3) zugeführt, darin zu einer viskosen Quarzglasmasse (27) erweicht und diese durch eine im Bodenbereich des Schmelztiegels (1) vorgesehenen Ziehdüse (4; 34) mit spaltförmigem Auslass (25; 36) als zylinderförmiger Quarzglasstrang (5; 33) vertikal nach unten abgezogen und daraus der Quarzglaszylinder abgelängt wird, **dadurch gekennzeichnet, dass** die viskose Quarzglasmasse (27) über eine in einem oberen, dem Tiegel-Innenraum zugewandten Bereich der Ziehdüse (4, 34) vorgesehene Strömungsverengung (12; 32), die nach unten über einen Strömungskanals in den Auslass (25; 36) mündet, abgezogen wird, wobei der Auslass eine Öffnungsweite aufweist, die größer ist als die Weite der Strömungsverengung (12; 32), und wobei ein erster Hüllkreis um die Strömungsverengung (12; 32) einen Durchmesser aufweist, der maximal 30 % des Durchmessers eines zweiten Hüllkreises um die maximale seitliche Abmessung des abzuziehenden Quarzglasstrangs (5; 33) beträgt..

10. Verfahren nach Anspruch 9, **dadurch gekennzeichnet, dass** die Strömungsverengung (12; 32) in einem Bereich um eine Mittelachse (26) des Tiegel-Innenraums (17) verläuft.

11. Verfahren nach Anspruch 9 oder 10, **dadurch gekennzeichnet, dass** die Strömungsverengung (12; 32) einen Öffnungsquerschnitt aufweist, dessen Fläche weniger als 10 %, vorzugsweise weniger als 5 %, der radialen Querschnittsfläche des Tieget-Innenraums (17) beträgt.

12. Verfahren nach einem der Ansprüche 9 bis 11, **dadurch gekennzeichnet, dass** der erste Hüllkreis einen Durchmesser aufweist, der maximal 20 % des Durchmessers des zweiten Hüllkreises beträgt.

13. Verfahren nach einem der Ansprüche 9 bis 12, **dadurch gekennzeichnet, dass** zum Ziehen eines Quarzglasrohres eine Ziehdüse (4; 34) mit ringspaltförmigem Auslass (25; 36), der von einer Bodenöffnung und einem Ziehdüsen-Innenteil definiert wird, eingesetzt wird, wobei die viskose Quarzglasmasse (27) über die Strömungsverengung (12; 32) nach unten in einen Hohlraum gelangt, in den hinein unter Belassung des Strömungskanals ein Dorn (9; 39) hinein ragt, der einen maximalen Außenumfang aufweist, der größer ist als die Weite der Strömungsverengung (12; 32).

14. Verfahren nach Anspruch 13, **dadurch gekennzeichnet, dass** der Dorn (39) an mindestens einem Steg (35) gehalten oder mittels diesem zentriert wird, der sich von der Tiegel-Seitenwand zum Dom (39) erstreckt oder der sich vom Rand der Strömungsverengung (12) zum Dom (9) oder zu einer nach oben ragenden Verlängerung (11) des Dorns (9) erstreckt.

15. Verfahren nach Anspruch 14, **dadurch gekennzeichnet, dass** der Steg (20; 35) als Hohlsteg ausgebildet ist und mit einer im Dom (39) ausgebildeten Gaszufuhrleitung (38) für die Zufuhr eines Gases in die Innenbohrung (24) des abgezogenen Quarzglasstrangs (33) verbunden ist.

## Claims

1. An apparatus for drawing a quartz glass cylinder (5; 33), the apparatus comprising a melting crucible (1) receiving a SiO₂-containing start material (3), that has a crucible interior (17) defined by a sidewall and a bottom region, said crucible comprising a heating device (13) for softening the start material (3), a draw die (4; 34) provided in the bottom region of the melting crucible (1) and having a gap-shaped outlet (25; 36), **characterized in that** said draw die (4; 34) having an upper region that faces the crucible interior, in said upper region a flow constriction (12; 32) is provided that leads downwards via a flow channel to the outlet (25; 36), said outlet has an opening width larger than the width of the flow constriction (12; 32) and whereby a first enveloping circle around the flow constriction (12; 32) has a diameter that is not more than 30% of the diameter of a second enveloping circle around the maximum lateral dimension of the drawn-off quartz strand (5; 33).

2. The apparatus according to claim 1, **characterized in that** the flow constriction (12; 32) extends in a region around a central axis (26) of the crucible interior (17).

3. The apparatus according to claim 1 or 2, **characterized in that** the flow constriction (12; 32) has a cross-sectional area that is less than 10%, preferably less than 5%, of the radial cross-sectional area of the crucible interior (17).

4. The apparatus according to any one of the preceding claims, **characterized in that** the first enveloping circle has a diameter that is not more than 20% of the diameter of the second enveloping circle.

5. The apparatus according to any one of the preceding claims, **characterized in that** for drawing a tubular quartz glass cylinder the draw die (4; 34) is provided that has an outlet (25; 36) which is in the form of an annular gap and which is defined by a bottom opening and an interior part (9; 39) of the draw die, with the flow constriction (12; 32) terminating downwards in a cavity and the interior part of the draw die has a mandrel (9; 39) which projects into the cavity while maintaining the flow channel and has a maximum outer circumference greater than the width of the flow constriction (12; 32).

6. The apparatus according to claim 5, **characterized in that** the mandrel (39) is held on at least one web (35) or is centered by means of said web and the web extends from the crucible sidewall to the mandrel (39).

7. The apparatus according to claim 5 or 6, **characterized in that** the mandrel (9) is held on at least one web (20) or is centered by means of said web and the web extends from the edge of the flow constriction (12) to the mandrel (9) or to an upwardly projecting extension (11) of the mandrel (9).

8. The apparatus according to claim 6 or 7, **characterized in that** the web (20; 35) is formed as a hollow web and is connected to a gas supply line (38) in the mandrel (39) for supplying gas into the inner bore (24) of the drawn-off quartz glass tube (33).

9. A method for drawing a quartz glass cylinder, in which SiO₂-containing start material (3) is supplied to a melting crucible (1), said start material is softened therein into a viscous quartz glass mass (27), and said glass mass is pulled vertically downwards as a cylindrical quartz glass strand (5; 33) through a draw die (4; 34) which is provided in the bottom region of the melting crucible (1), said draw die has a gap-shaped outlet (25; 36), and the quartz glass cylinder is cut therefrom to a length, **characterized in that** the viscous quartz glass mass (27) is drawn through a flow constriction (12; 32) which is provided in an upper region of the draw die (4; 34) facing the crucible interior and which leads downwards via a flow channel to the outlet (25; 36), wherein the outlet has an opening width greater than the width of the flow constriction (12; 32), and wherein a first enveloping circle around the flow constriction (12; 32) has a diameter that is not more than 30% of the diameter of a second enveloping circle around the maximum lateral dimension of the drawn-off quartz strand (5; 33).

10. The method according to claim 9, **characterized in that** the flow constriction (12; 32) extends in a region around a central axis (26) of the crucible interior (17).

11. The method according to claim 9 or 10, **characterized in that** the flow constriction (12; 32) has a cross-sectional area that is less than 10%, preferably less than 5%, of the radial cross-sectional area of the crucible interior (17).

12. The method according to any one of claims 9 to 11, **characterized in that** the first enveloping circle has a diameter which is not more than 20% of the second enveloping circle.

13. The method according to any one of claims 9 to 12, **characterized in that** for drawing a quartz glass tube the draw die (4; 34) has an outlet (25; 36) which is in the form of an annular gap and is defined by a bottom opening and an interior part of the draw die, the viscous quartz glass mass (27) passing via the flow constriction (12; 32) downwards into a cavity into which a mandrel (9; 39) projects while maintaining the flow channel, said mandrel having a maximum outer circumference greater than the width of the flow constriction (12; 32).

14. The method according to claim 13, **characterized in that** the mandrel (39) is held on at least one web (35) or is centered by means of said web whereby the web either extends from the crucible sidewall to the mandrel (39) or the web extends from the edge of the flow constriction (12) to the mandrel (9) or to an upwardly projecting extension (11) of the mandrel (9).

15. The method according to claim 14 or 15, **characterized in that** the web (20; 35) is formed as a hollow web and is connected to a gas supply line (38) in the mandrel (39) for supplying gas into the inner bore (24) of the drawn-off quartz glass strand (33).

## Revendications

1. Dispositif pour le tirage d'un cylindre de verre de quartz (5; 33) avec un creuset de fusion (1) pour recevoir le matériau initial (3) contenant du SiO₂ creuset qui comprend une cavité interne de creuset (17) qui est limitée par une paroi latérale et une zone de fond, avec un dispositif de chauffage (13) pour ramollir le matériau de départ (3) ainsi qu'une buse de tirage (4, 34) prévue dans la zone de fond du creuset de fusion (1) avec une sortie (25, 36) en forme de fente, **caractérisé en ce qu'**il est prévu dans une zone supérieure tournée ver la cavité interne de creuset, de la buse de tirage (4, 34) un rétrécissement d'écoulement (12; 32) qui débouche vers le bas par un canal d'écoulement dans la sortie (25; 36) qui présente une largeur d'ouverture qui est supérieure à la largeur du rétrécissement d'écoulement (12; 32) et un premier cercle enveloppant présentant autour du rétrécissement d'écoulement (12; 32) un diamètre qui est de maximal 30 % du diamètre d'un second cercle enveloppant latéral autour de la dimension latérale maximale du brin de verre de quartz (5; 33) à tirer.

2. Dispositif selon la revendication 1, **caractérisé en ce que** le rétrécissement d'écoulement (12; 32) s'étend dans une zone autour de l'axe médian (26) de la cavité interne de creuset (17).

3. Dispositif selon la revendication 1 ou 2, **caractérisé en ce que** le rétrécissement d'écoulement (12; 32) présente une section transversale d'ouverture dont la surface est de moins 10 % de préférence de moins 5 % de la surface radiale de section transversale de la cavité interne de creuset (17).

4. Dispositif selon l'une des revendications précédentes, **caractérisé en ce que** le premier cercle enveloppant présente un diamètre qui représente au maximum 20 % du diamètre du second cercle enveloppant.

5. Dispositif selon l'une des revendications précédentes, **caractérisé en ce que** pour le tirage d'un cylindre de verre de quart tubulaire, il est prévu une buse de tirage (4; 34) avec une sortie (25; 36) en forme de fente qui est définie par une ouverture de fond et une partie interne de buse de tirage (9; 39), le rétrécissement d'écoulement (12; 32) débouchant vers le bans dans une cavité et la partie interne de buse de tirage comprenant un mandrin (9; 39) débouchant dans la cavité en laissant le canal d'écoulement, mandrin qui présente une périphérie externe maximale qui est plus grande que la largeur du rétrécissement d'écoulement (12; 32).

6. Dispositif selon la revendication 5, **caractérisé en ce que** le mandrin (39) est maintenu et centré sur au moins une âme (35) qui s'étend depuis la paroi latérale en direction du mandrin (39).

7. Dispositif selon la revendication 5 ou 6, **caractérisé en ce que** le mandrin (9) est maintenu et centré sur au moins une âme (20) qui s'étend depuis le bord du rétrécissement d'écoulement (12) en direction du mandrin (9) ou en direction d'un prolongement (11), du mandrin (9), prolongement qui est dirigé vers le haut

8. Dispositif selon la revendication 6 ou 7, **caractérisé en ce que** le mandrin (20; 35) est réalisé comme une âme creuse et est relié à une amenée de gaz (38) formée dans le mandrin (39) pour l'amenée d'un gaz dans le perçage interne (24) du tube de verre de quartz tiré (33).

9. Procédé pour le tirage d'un cylindre de verre de quartz, dans lequel un matériau initial (3) contenant du SiO₂ est amené à un creuset de fusion (1), est ramolli en une masse de verre de quartz visqueuse (27) qui est tirée par une buse de tirage (4; 34) prévue dans la zone de fond du creuset de fusion (1) avec une sortie (25; 36) en forme de fente, en un brin cylindrique de verre de quartz (5; 33) verticalement vers le bas et le cylindre de verre de quartz est découpé, **caractérisé en ce que** la masse visqueuse de verre de quartz (27) est tirée par un rétrécissement d'écoulement (12; 32) prévue dans une zone supérieure tournée vers la cavité interne de creuset, de la buse de tirage (4, 34), rétrécissement qui débouche vers le bas par un canal d'écoulement dans la sortie (25; 36), la sortie présentant une largeur d'ouverture qui est supérieure à la largeur du rétrécissement d'étranglement (12; 32), un premier cercle enveloppant présentant autour du rétrécissement d'écoulement (12; 32) un diamètre qui est de maximum 30 % du diamètre d'un second cercle enveloppant latéral autour de la dimension latérale maximale du brin de verre de quartz (5; 33) à tirer.

10. Procédé selon la revendication 9, **caractérisé en ce que** le rétrécissement d'écoulement (12; 32) s'étend dans une zone autour de l'axe médian (26) de la cavité interne de creuset (17).

11. Procédé selon la revendication 9, **caractérisé en ce que** le rétrécissement d'écoulement (12; 32) présente une section transversale d'ouverture dont la surface est de e moins 10 % de préférence de moins 5 % de la surface radiale de section transversale de la cavité interne de creuset (17).

12. Procédé selon l'une des revendications 9 à 11, **caractérisé en ce que** le premier cercle enveloppant présente un diamètre qui représente au maximum 20 % du diamètre du second cercle enveloppant.

13. Procédé selon l'une des revendications 9 à 12, **caractérisé en ce que** pour le tirage d'un cylindre de verre de quartz tubulaire, il est utilisé une buse de tirage (4; 34) avec une sortie (25; 36) en forme de fente qui est définie par une ouverture de fond et une partie interne de buse de tirage, la masse visqueuse de verre de quartz (27) débouchant par le rétrécissement d'écoulement (12; 32) vers le bas dans une cavité dans laquelle s'engage un mandrin (9; 39) en laissant le canal d'écoulement, mandrin qui présente une périphérie externe maximale qui est plus grande que la largeur du rétrécissement d'écoulement (12; 32).

14. Procédé selon la revendication 13, **caractérisé en ce que** le mandrin (39) est maintenu ou centré sur au moins une âme (35) qui s'étend depuis la paroi latérale en direction du mandrin (39) ou qui s'étend depuis le bord du rétrécissement d'écoulement (12) en direction du mandrin (9) ou en direction d'un prolongement (11) du mandrin (9), prolongement qui est dirigé vers le haut

15. Procédé selon la revendication 14, **caractérisé en ce que** l'âme (20; 35) est réalisé comme une âme creuse et est relié à une amenée de gaz (38) formée dans le mandrin (39) pour l'amenée d'un gaz dans le perçage interne (24) du tube de verre de quartz tiré (33).
